# EUROPÄISCHE PATENTSCHRIFT

(11) **EP 0 671 679 B1**
(45) Veröffentlichungstag und Bekanntmachung des Hinweises auf die Patenterteilung: **26.01.2000**
(21) Anmeldenummer: 95103084.0
(22) Anmeldetag: 03.03.1995
(51) Int. Cl.: G05B 19/42

(54) **Vorrichtung und Verfahren zum berührungslosen Vermessen dreidimensionaler Objekte auf der Basis optischer Triangulation**
Method and device to measure without contact tridimensional objects based on optical triangulation
Méthode et dispositif de mesure sans contact d'objects tri-dimensionnels basé sur la triangulation optique

(30) Priorität: 07.03.1994 DE 4407518; 08.02.1995 DE 19504126
(43) Veröffentlichungstag der Anmeldung: 13.09.1995
(73) Patentinhaber: INTECU Gesellschaft für Innovation, Technologie und Umwelt mbH, 07554 Korbussen (DE)
(72) Erfinder: Just, Gerhard, Dr. rer. nat., D-07549 Gera (DE); Nauschütz, Karl-Heinz, D-07549 Gera (DE); Posern, Heinrich, D-08373 Remse (DE); Grunert, Frank, D-07552 Gera (DE); Blochinger, Jens, D-07552 Gera (DE)
(74) Vertreter: Kruspig, Volkmar, Dipl.-Ing.

(56) Entgegenhaltungen:
- EP-A- 0 163 076
- DE-A- 3 910 855
- US-A- 5 218 427
- JOURNAL OF MANUFACTURING SYSTEMS, Bd. 10, Nr. 5, 1.Januar 1991 Seiten 383-395, XP 000243565 SAEID MOTAVALLI ET AL. 'A PART IMAGE RECONSTRUCTION SYSTEM FOR REVERSE ENGINEERING OF DESIGN MODIFICATIONS'

## Beschreibung

Die Erfindung betrifft ein Verfahren zum berührungslosen Vermessen dreidimensionaler Objekte auf der Basis optischer Triangulation gemäß dem Oberbegriff des Patentanspruches 1.

Verfahren zum berührungslosen Vermessen der Außenkonturen von dreidimensionalen Objekten mittels elektromagnetischer Strahlung auf der Basis optischer Triangulation sind bekannt. Hierbei befindet sich das Objekt auf einem Drehteller und wird mittels einer Abtasteinheit, die relativ zum Drehteller in x- und z-Richtung bewegbar ist und eine Strahlungsquelle sowie Strahlungsdetektoren enthält, abgetastet. Bei derartigen Vorrichtungen wir der von der Abtasteinrichtung ausgehende und am Objekt remittierte Meßstrahl hinsichtlich des Auftreffpunktes auf einen in der Abtasteinrichtung angeordneten Sensor untersucht, wobei das Sensorausgangssignal mit einer Auswerteeinheit rechnergestützt weiterverarbeitet wird, um entsprechende Informationen über die Objektoberflächenentfernung, x-, y- und z-Lage der Abstasteinheit und der Drehlage des Drehtellers zu erfassen, um daraus wiederum dreidimensionale, digitale Daten zur Verfügung zu stellen.

Derartige Daten werden dann abgespeichert, um in 3D-Bildbear-bei-tungssystemen, z. B. zur Steuerung einer numerischen Werkzeugmaschine zur Verfügung zu stehen.

Die Vermessung dreidimensionaler Objekte mittels optoelektronischer Sensorik und auf der Basis der Triangulation ermöglicht eine genaue Datenerfassung, welche schneller möglich ist, als dies mit mechanischen Abtastvorrichtungen realisiert werden kann.

Bei der aus der DE 39 10 855 C2 vorbekannten Vorrichtung zum Vermessen dreidimensionaler Objekte soll der konstruktive Aufwand, insbesondere zur Bewegung der Abtasteinheit in X- und Z-Richtung vereinfacht werden. Gemäß der dortigen Lösung wird ein handelsüblicher EDV-Plotter als X- und Z-Schlitten für die Abtasteinheit verwendet, welcher auf einem L-förmigen Grundgestell montiert ist. Der waagerechte Schenkel des L-förmigen Grundgestells dient der Befestigung des Drehtellers, wobei der vorerwähnte EDV-Plotter auf dem senkrechten Schenkel des Grundgestells angeordnet ist.

Ein Problem ergibt sich dann, wenn mit der dort gezeigten Vorrichtung Objekte vermessen werden sollen, die Hinterschneidungen oder verdeckte Stellen aufweisen. In diesem Falle muß nämlich die Meßeinheit zusätzlich in y-Richtung verfahrbar sein. Eine derartige, in zwei Ebenen senkrecht zueinanderstehende Verfahrbarkeit erhöht jedoch zum einen den mechanisch konstruktiven Aufwand und führt zum anderen zu einer Instabilität und mechanischen Schwingungen der gesamten Meßeinheit. Darüberhinaus ist es außerordentlich schwierig, in zwei Ebenen möglichst schnell mit hoher Dynamik Lageveränderungen vorzunehmen, wobei zu bedenken ist, daß Ungenauigkeiten in der Positionierung der Abtasteinheit mit den Sensoren bzw. der Strahlungsquelle eine erhebliche Verschlechterung der Meßgenauigkeit nach sich ziehen.

Es ist daher Aufgabe der Erfindung, eine Vorrichtung und ein Verfahren zum berührungslosen Vermessen dreidimensionaler Objekte auf der Basis optischer Triangulation anzugeben, welche es gestatten, ein Objekt mit hoher Präzision auch dann zu vermessen, wenn dieses Objekt Hinterschneidungen, verdeckte Stellen, Sacklöcher oder ähnliches aufweist.

Die Lösung der Aufgabe der Erfindung erfolgt mit einem Gegenstand nach den Merkmalen der Patentansprüche 1 und 9, wobei die Unteransprüche mindestens zweckmäßige Ausgestaltungen und Weiterbildungen umfassen.

Der Grundgedanke der Erfindung besteht darin, einen Abtastkopf auszubilden, welcher in vertikaler, d. h. in z-Richtung linear bewegbar ist und der weiterhin eine Antriebseinheit aufweist, welche ein vorgegebenes Verschwenken, Kippen und/oder Drehen des Abtastkopfes an einer jeweils vorgegebenen z-Position, d.h. an einem Fixpunkt ermöglicht.

Gemäß einem weiteren Gedanken der Erfindung erfolgt die Bewegung des Drehtisches, welcher der Aufnahme des zu vermessenden Objektes dient, quasi-kontinuierlich, wodurch unerwünschte Schwingungen des Objektes oder der gesamten Vorrichtung mit dem Nachteil geringer Meßgenauigkeit, wie dies bei schrittweisem Drehantrieb gegeben ist, vermieden werden.

Das dreidimensionale Vermessen erfolgt dann dadurch, daß das auf dem Drehteller bzw. Drehtisch befindliche Objekt auf einer ringähnlichen Umfangslinie, in nicht unbedingt fortschreitender Reihenfolge, punktweise abgetastet wird. Nach jeder Umdrehung des Drehtisches wird der Abtastkopf in z-Richtung um einen vorgegebenen Schritt weitertransportiert. Anschließend erfolgt das Abtasten eines nächsten Ringes und die entsprechende Datenübertragung. Die vorstehende Verfahrensweise wird so lange wiederholt, bis das gesamte Objekt umfangsmäßig abgetastet ist. Die an eine nachgeordnete Datenverarbeitungseinrichtung übertragenen Informationen beschreiben demnach Punkte auf der Oberfläche des Objekts als X-, Y-, Z-Koordinaten.

Die vorstehend beschriebene Abtastung wird mindestens in einer vorgegebenen Winkelstellung des Abtastkopfes durchgeführt. Es hat sich herausgestellt, daß bei sehr ungleichmäßigen Objekten eine Mehrfachabtastung, quasi zur Bildung einer Abtastpunktwolke, in unterschiedlichen Winkelstellungen zweckmäßig ist. Mit Hilfe dieser Mehrfachabtastung wird ein spezielles Abtastfenster gebildet, wobei die in diesem Fenster erhaltene Vielzahl von Informationen in der Datenverarbeitungseinheit zu einer eindeutigen Aussage über die Konfiguration bzw. Oberflächengestaltung des Objektes eben an dieser Stelle zusammengefügt wird.

Durch die Möglichkeit des Schwenkens der Blickrichtung des Abtastkopfes um die Vertikalachse um einen bestimmten vorwählbaren Winkel können unterschiedliche Blickrichtungen auf das Objekt eingestellt werden. Hierdurch können in vorteilhafter Weise verdeckte Oberflächenteile durch Messungen mit Hintergriff erkannt werden. Damit können ansonsten nicht einsehbare Flächenstücke des Objektes, besonders bei mehrfach zusammenhängenden Oberflächen, also z. B. Oberflächen mit Durchgangslöchern, ausreichend genau abgescannt werden. Durch eine Einstellung der Blickrichtung des Abtastkopfes durch Kippen desselben um im wesentlichen 90° um die Rollachse der Beobachtungsrichtung und Schwenken der Meßkopfblickrichtung in der Neigungsachse um einen vorwählbaren Winkel können schlecht vermeßbare Oberflächenstücke des Objektes, wie z. B. achsennahe oder weitgehend horizontale bzw. waagerechte Oberflächenbereiche erfaßt werden.

Durch mehrfach vorhandene Empfängerbaugruppen, d. h. Strahlungsdetekoren und entsprechende Optiken, kann eine höhere Signalwahrheit erreicht werden. Dies dient damit der Verbesserung der Signalsicherheit bei Remissionsproblemen durch entsprechende logische Prüfalgorithmen. Letztendlich wird hierdurch die horizontale Ortsgenauigkeit durch geometrisches Ausschalten des Symmetriefehlers verbessert sowie der Absolutfehler verringert.

Ein weiterer, wesentlicher Grundgedanke der Erfindung besteht darin, eine dynamische Regelung der Lichtleistung der verwendeten Strahlungsquelle, z. B. einer Laserdiode, vorzunehmen, wodurch die Deutungswahrscheinlichkeit des remittierten Lichtsignals auf den Strahlungsdetektoren und damit die Meßgenauigkeit erhöht werden kann. Durch eine einfache, steuerbare Verlängerung der Integrationszeit der als Strahlungsdetektoren verwendeten CCD-Zeilen oder Erhöhung der Laserlichtintensität können auch weit entfernte, winkelmäßig sehr ungünstige und/oder schwach reflektierende Objekte sicher vermessen werden.

Die Gewinnung der Tiefeninformation aus dem erhaltenen Gesamtsignal des CCD-Zeilensignals erfolgt einmal durch Messen beider Signalpeakflanken und arithmetischer Mittelung oder andererseits mit einer Entfaltung bzw. Teilentfaltung, z.B. durch entsprechende analoge Signalverarbeitung, bei welcher zunächst hohe Frequenzen ausgefiltert werden, differenziert, geglättet, nochmals differenziert und dann von der geglätteten Ursprungsfunktion die gewichtete zweite Ableitung subtrahiert wird. Alternativ kann eine digitale Entfaltung oder Defuzzyfizierung erfolgen.

Das erfindungsgemäße Verfahren soll nunmehr anhand eines Ausführungsbeispieles und von Figuren näher erläutert werden.

Hierbei zeigen:
- Fig. 1a,b: prinzipielle Darstellungen des optischen Triangulationsverfahrens mit dem Ziel der Verdeutlichung des Wirkungsprinzips des Abtastkopfes und
- Fig. 2: den prinzipiellen Aufbau der Vorrichtung mit den angedeuteten Möglichkeiten des Verschwenkens und Kippens des Abtastkopfes.

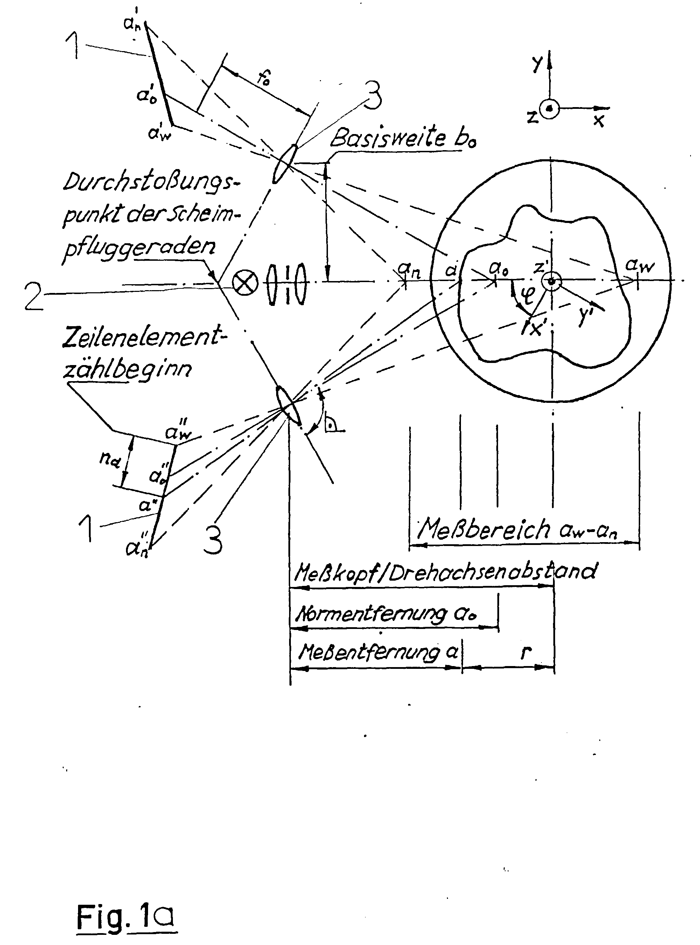

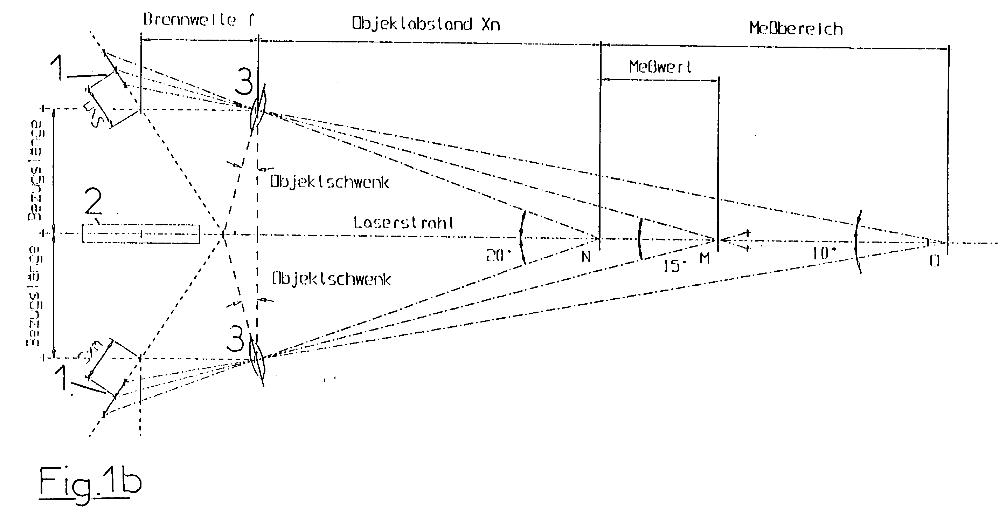

Mit den Figuren 1a, b sollen zunächst die Meßgeometrie des Abtastkopfes und die damit realisierte optische Triangulation kurz erläutert werden.

Zwei CCD-Zeilen 1 sind in vorgegebener Winkelposition im wesentlichen symmetrisch zum Strahlengang eines als Strahlungsquelle dienenden Lasers 2 angeordnet. Jeder CCD-Zeile 1 ist ein entsprechendes Objektiv 3 zugeordnet. a ist ein Meßpunkt des zu vermessenden Objektes und die Zeilenpixelnummer na stellt die Maßverkörperung der Meßentfernung a, die mittels der CCD-Zeilen 1 gewonnen wird, dar.

Das vom Laser 2 ausgesandte gebündelte Licht wird von der Oberfläche des abzutastenden Objektes reflektiert. Der Remissionsanteil wird innerhalb des Meßbereiches durch die Optik 3 erfaßt und als Meßgröße na von den jeweiligen CCD-Zeilen 1 ausgewertet. Diese auf der jeweiligen CCD-Zeile 1 ermittelte Position wird als Maß für die Bestimmung der Entfernung des abgetasteten Punktes auf der Oberfläche des dreidimensionalen Körpers benutzt.

Da das Empfängerobjektivbildfeld noch eine Restwölbung hat, wird der Fokus nur an 2 Punkten auf der ebenen CCD-Zeile ideal scharf abgebildet. In der Triangulationsrechnung werden die Objektivhauptebenenabstände, die Strahlversätze durch die CCD-Zeilenfenster und die Bandfilter sowie die gemessenen CCD-Zeilenmittelwerte und/oder Daten in Form einer scanobjektbezogenen Targeteichung berücksichtigt.

Die Objekttastort-Datentripelerrechnung erfolgt unter Berücksichtigung des Meßkopf-/ Objektdrehachsenabstands, der Objektivdrehwinkellage, der Meßentfernung, des Meßkopfschwenkwinkels, des Meßkopfkippwinkels und der Überhöhung des Meßstrahls über die Drehtellerebene am Meßkopfort.

In einer Ausgestaltung der Erfindung sind die CCD-Zeilen 1 und/oder die Objektive 3 bewegbar. Die Strahlung des Lasers 2 wird mit einer nicht gezeigten, später erläuterten, automatischen Fokussierung dynamisch fokussiert, um bei Objekten mit unterschiedlichem Durchmesser die Meßgenauigkeit zu erhöhen.

Durch die mehrfach vorhandenen Empfängerbaugruppen bzw. CCD-Zeile 1 mit den zugehörenden Objektiven 3 wird die Fehlerwahrscheinlichkeit durch das Ausschalten meßprinzipbedingter Fehler verringert und Probleme bei unterschiedlich remittierenden Oberflächen oder Oberflächenteilen des Objektes ausgeschaltet.

Mittels spezieller Schritte werden die anfallenden Daten auf Relevanz geprüft.
Im Idealfall wird der Meßwert aus beiden Kanälen gemittelt.

Fällt ein Meßkanal wegen fehlendem Signal aus, wird nur der andere Kanal zur Meßwertgewinnung herangezogen. Das gilt u.a. auch für zu geringe Meßsignalamplituden, für Meßsignale außerhalb des Meßbereiches und für Doppelsignale.
Die erkannten Fehlerursachen werden ebenfalls dem Auswerterechner gemeldet.

Je nach Objektoberflächeneigenschaften kann die Zeilenempfindlichkeit vorgewählt werden.
Zur Erhöhung des Auflösungsvermögens wird die physikalische Photoelementezahl (Pixelanzahl) der CCD-Zeilen auf elektrischem Wege faktisch verdoppelt.

Pro Objektumdrehung anfallende Datensätze werden zwischengespeichert. Durch Wechsel der Speicher nach jeder vollen Objektdrehung und wechselweises Weitersenden ist eine nahtfreie, also 360° umfassende Aufnahme der Objektoberfläche auch bei der höchsten Abtastrate möglich.

Die CCD-Zeilenpixelnummerndaten werden in Objektoberflächenpixeldaten umgerechnet und können durch ihren geordneten Anfall in einem speziellen extrem speicherplatzsparenden Datenformat abgelegt werden.

Es liegt im Sinne der Erfindung, die Meßgenauigkeit durch Meßwertakkumulation und Mittelwertbildung zu erhöhen und die Auswirkungen von Rauschen zu minimieren.

Die Kinematiken von Scangerät und Justiervorrichtungen sind so gewählt, daß 180°- Schwenks und/oder Ortsaustausch letzterer eine justiergünstige Subtraktion der Fehler bei Meßentfernung, Drehachsenquer- und Längsabweichung sowie Strahlneigung und Rechtwinklichkeitsfehler ermöglichen.

Verbleibende aber vermessene Restfehler der Scankinematik und der Führungsbahngeradheiten und -ebenheiten bzw. Führungsbahnschieflagen können als Addition bzw. Subtraktion von kegelstumpfförmigen Korrekturkörpern bei der Objekttastort- Datentripelerrechnung berücksichtigt werden.

Für quasidynamische bzw. zeitaufgelöste Messungen durch fortlaufende Wiederholungsmessungen mit außerordentlich schnellem Meßwert- bzw. Datenfluß können auch einzelne Punkte, Ringe, Spiralbahnen oder vertikale Linien als Quasiortsraum-Meßwertfenster für die Analyse des Zeitverhaltens, z.B. für das Eigenschwingverhalten, vorgewählt werden. Die CCD-Zeilen 1 sind in jeweils drei Translations- und Rotationsrichtungen justierbar (nicht gezeigt). Die Zeilen können dabei so justiert sein, daß auch mehrere Zeilen annähernd die gleichen CCD-Einzelphotoelementnummern anzeigen, und daß die Signaldynamiken innerhalb einer Zeile bei gleichen äußeren Bedingungen weitgehend gleich sind.

Die Meßgenauigkeit kann weiterhin dadurch erhöht werden, daß eine speziell geformte, kombinierte Loch- und Ringblende bzw. ein entsprechender Blendensatz so vorhanden und ausgestaltet ist, daß sich als Superposition der Beugungserscheinungen die weitgehend glatteste Hüllkurve der Lichtfleckstruktur auf dem Objekt ergibt.

Die für den Laser 3 verwendete Optik gestattet die Ausbildung einer Beleuchtungsfläche am Objekt mit einem Durchmesser kleiner gleich 0,2 mm. Die Auflage für die Objektive 3 ist bezogen auf die Anordnung der CCD-Zeilen 1 separat und für entsprechende Winkel gegenüber der Lichtwellenachse in einem Bereich von 5 bis 20°schwenkbar. Anstelle des verwendeten Lasers kann alternativ auch eine Xenon-Hochdrucklampe mit einem entsprechenden Kollimator zur Einstellung der Strahltaille und zur Bildung einer Quasipunktlichtquelle eingesetzt werden.

Der Laser 2, der Kollimator und der Kollimatorantrieb sind als einheitliche optische Fokussiereinheit ausgebildet. Die zur Fokussierung erforderlichen, beweglichen Kollimatorenelemente sind vollständig im Kollimatorantrieb aufgehangen.

Der eigentliche Kollimatorantrieb setzt sich aus der Antriebseinheit und der Kollimatoraufhängung zusammen, welche im wesentlichen aus einer eine Gegenkraft erzeugenden Federeinheit besteht. Die beweglichen Teile des Kollimatorantriebes und der Kollimatoraufhängung sind in Leichtbauweise, vorzugsweise unter Verwendung von Kunststofflaminaten, ausgeführt. Mittels des speziellen Kollimatorantriebes kann die Einstellung des Fokuspunktes auf dem Objekt durch den Kollimator und mit einer Dynamik bis hinein in den Kilohertzbereich erfolgen.

Die Antriebseinheit des Kollimators ist ein Linearantrieb mit hohem Beschleunigungsvermögen durch geringe Masse bei hohen Einstellgeschwindigkeiten. Der Antrieb selbst sitzt direkt auf der optischen Achse, wodurch eine direkte Kraftübertragung und Minimierung sekundärer Bahnfehler erreicht wird.
Der Antrieb ist weiterhin als ein magnetisches Tauchspulensystem ausgebildet, wobei die Tauchspule eine angenähert lineare Kennlinie aufweist. Der vorstehend erwähnte Antrieb wird unter Vorlast betrieben. Dies erlaubt nach erfolgter mechanischer Grundeinstellung der Fokussiereinheit, diese elektrisch fein zu justieren und gegebenenfalls optimale Bereiche des Zusammenwirkens der Vorspannfederkennlinie und der Kennlinie des eigentlichen Antriebes auszuwählen.

Der Kollimatorantrieb wird elektrisch derart angesteuert, daß sich der Ablenkstrom PID-artig aus einem Beschleunigungsstrompuls, dem eigentlichen Auslenkstrom und einem kurzen Abbremsstrompuls, überlagert von einem ständig anliegenden Justiergrundstrom zusammensetzt. Hierdurch kann äußerst schnell und einfach justiert und fokussiert werden.

Die Bestimmung der Strommenge zur Magnetantriebssteuerung erfolgt durch Auswertung des Meßsignals eines optischen Entfernungsmessers und über Look-up-Tabellen und anschließende Berechnung mittels eines Einchip-Mikrorechners. Unter Beachtung des Fokussierpunktverlaufes kann die Stromsignalbereitstellung für den Antrieb adaptiv oder auf Erfahrungswerten aufbauend quasi fuzzylogisch bereitgestellt werden. Hierdurch ist eine besonders schnelle, hoch dynamische Fokussierung möglich.

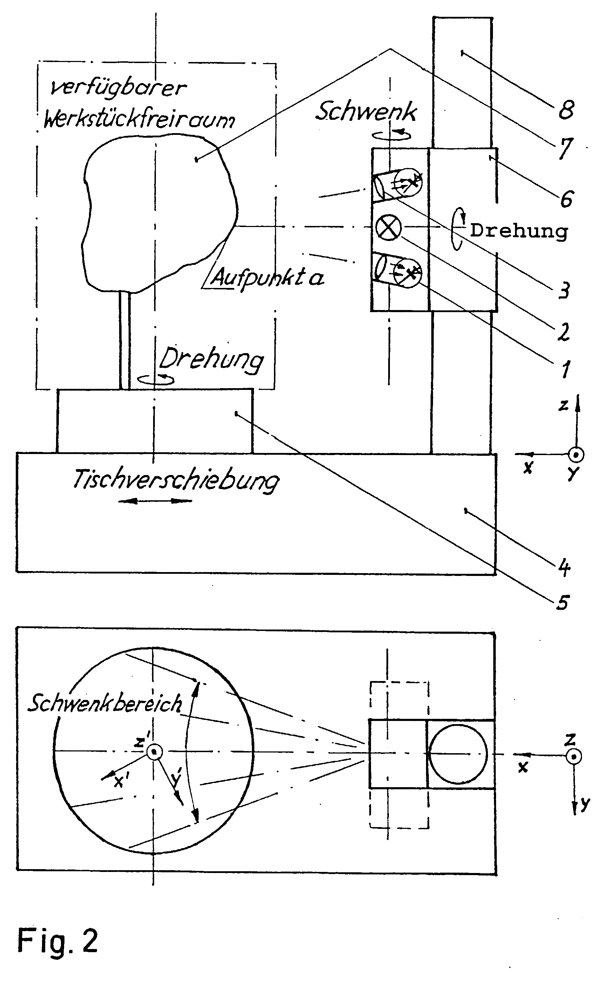

Die Fig. 2 dient der Erläuterung der Vorrichtung zum Vermessen dreidimensionaler Objekte und zeigt ein im wesentlichen U-förmiges Grundgestell 4. Den einen Schenkel bildet ein Drehteller 5. Im waagerechten, fußförmigen Teil 4 befindet sich auch der Antrieb für den Drehteller 5. Die Gestaltung der Antriebe als Mikro-Schrittantriebe mit speziellen Hochlauf- und Abbremskurven gewährleistet einen sicheren schwingungsarmen Betrieb.
Der Abstand zwischen Meßkopf- und Objektdrehteller-Drehachse kann dabei motorisch oder durch Umsetzen von Hand je nach gewollter Lage des Entfernungsmeßbereiches zur Objektlage schrittweise oder quasikontinuierlich frei vorgewählt werden.

Ein vertikaler, in z-Richtung gebildeter Schenkel 8 des Gestells nimmt die Mittel zum Vertikalantrieb des Abtastkopfes 6, der die Strahlungsquelle (Laser) 2 und die Empfänger (CCD-Zeilen) 1 umfaßt, auf.

Der Abtastkopf 6 verfügt über einen im einzelnen nicht gezeigten Schwenkantrieb.

Die gesamte mechanische Grundkonstruktion ist mit schwingungsdämpfenden Mitteln versehen, die im aufgestellten Zustand noch Stöße kleiner gleich 3g vom Geräteinneren abhalten können.

Der Vertikal- und Schwenkantrieb ist als Spindelantrieb ausgelegt, wodurch eine Positionsgenauigkeit im Bereich von kleiner gleich 15 µm erreicht werden kann. Der Antrieb des Drehtellers 5 besteht aus einem Flachriemenvorgelege und Schrittmotor. Das Auflösungsvermögen am Drehtellerumfang wird durch das gesamte Auflösungsvermögen des axialgekoppelten Drehgebers bestimmt und kann z. B. 8196 Impulse pro Umdrehung oder ganzzahlige Teiler davon betragen. Die unterschiedlichen Möglichkeiten des Verschwenkens sind in der Fig. 2 angedeutet. Zusätzlich besteht die Möglichkeit, daß der Abtastkopf 6 quasi in der Achse der Strahlungsquelle 2 verdreht wird.

Die Kopfschwenkbarkeit in der x-y-Ebene beträgt bei einem Ausführungsbeispiel mindestens ± 20°, die Kippbarkeit in der x-z-Ebene ebenfalls mindestens ± 20°.

Mit der vorgestellten Vorrichtung können Objekte mit einem Durchmesser über 300 mm abgetastet werden, wobei das Abtastraster im Bereich von 0,05 bis 6,4 mm liegt. Die Auflösung in Meßrichtung liegt im wesentlichen bei 50 µm. Die Wellenlänge der verwendeten Strahlung beträgt 670 nm und die Meßfrequenz 5 kHz.
Das Scanobjekt 7 wird mit nicht gezeigten Spannmitteln auf dem Drehteller 5 befestigt. Mit Hilfe des Drehtellers 5 bzw. des Drehtellerantriebes dreht sich das dreidimensionale Objekt 7 am Abtastkopf 6 in waagerechter Richtung vorbei. Es sei angemerkt, daß vorteilhafterweise zur Funktionsüberwachung der Antriebe berührungslos arbeitende Positionssensoren vorgesehen sind. Der Abtastkopf 6 wird, wie bereits erwähnt, von einem Vertikalantrieb in senkrechter Richtung am Abtastobjekt 7 vorbeigeführt. Mit dem erwähnten Schwenkkipp- bzw. Drehantrieb sind unterschiedliche Winkellagen des Abtastkopfes 6 hin zum Abtastobjekt 7 einstellbar.
Hierdurch gelingt es, auch zur x-y-Ebene parallele Ebenen erfolgreich abzutasten, bzw. die Auswirkungen von Hinterschneidungen oder Sacklochbohrungen oder ähnliches beim Scannen des Objektes zu vermeiden.

Die Abtastung erfolgt mindestens in einer Winkelstellung des Abtastkopfes 6. Bei sehr ungleichmäßigen Objekten wird zweckmäßigerweise eine Mehrfachabtastung bei konstantem z-Fixpunkt in unterschiedlichen Winkelstellungen des Abtastkopfes 6 durchgeführt.

Dabei sind schnelle grob gerasterte Probescans zum Anmustern und Optimieren der Objektausrichtung möglich.

Mit dem Verfahren zum berührungslosen Vermessen dreidimensionaler Objekte auf der Basis optischer Triangulation kann unter Anwendung spezieller Kinematiken auch die Konfiguration mehrfach zusammenhängender Oberflächen bestimmt werden. Die kinematischen Parameter sind frei wählbar und können quasi kontinuierlich durchfahren werden. So ist die Drehung des Drehtellers, auf welchem das Objekt befindlich ist, beispielsweise in Schritten von 0 bis 4 Umdrehungen je Sekunde einstellbar.
Zusätzlich kann eine Verschiebung des Drehtisches in Meßkopfrichtung vorgenommen werden. Ein Verschwenken und Kippen bzw. Verdrehen des Abtastkopfes ermöglicht die Erfassung verdeckter Flächengebiete. Der Rasterabstand in Vertikal- und in Objektumfangsrichtung liegt bei im wesentlichen 0,1 mm.

Alles in allem können mit dem Verfahren geometrisch komplizierte und mathematisch schwer beschreibbare Objekte, die über Hinterschneidungen, Sacklöcher und dergleichen verfügen, mit geringem Aufwand räumlich erfaßt werden, wobei die bereitgestellten 3D-Punktdaten von einem nachgeordneten PC oder einer Workstation weiter verarbeitet werden können. Dadurch, daß höchstens ein einziger linearer, nämlich ein Vertikalantrieb verwendet werden braucht und eigentlich zusätzlich in konstruktiv einfacher Weise nur Schwenk-Kipp- bzw. Drehbewegungen eines Abtastkopfes an einem jeweiligen vertikalen Fixpunkt ausgeführt werden, kann eine höhere Genauigkeit bei der Positionierung des Abtastkopfes, bezogen auf einen vorgegebenen Punkt der Oberfläche des zu vermessenden Objektes, erfolgen.
Das Verfahren wird besonders vorteilhaft zur Schuhleistenvermessung, im Formenbau im weitesten Sinne, bei Kunststoffspritz- und Druckerzeugnissen, beispielsweise für Spielzeuge und Designererzeugnisse, auch keramischen Formen sowie bei allen nicht kubistische bzw. Freiformflächen enthaltene, körperlichen Vorlagen, wie für orthopädische, dentaltechnische und archäologische Zwecke, die eine Fülle die Form charakterisierende Meßortdaten enthalten, angewendet.
Auch werden damit an nicht körperlichen Objekten beliebiger nichträumlicher Koordinatenstrukturen, z. B. Farbkörper oder Raum-Zeit-Temperaturkörper anhand der Digitalisierung ihrer körperlichen Nachgestaltungen Simulationen von Prozessen in Koordinatensystemen mit beliebigen Meßgrößen als Koordinatenachsen möglich.

## Patentansprüche

1. Verfahren zum berührungslosen Vermessen dreidimensionaler Objekte auf der Basis optischer Triangulation, wobei die von einer Strahlungsquelle in einem kartesischen x-, y-, z-Koordinatensystem in x-Richtung ausgesendete, gebündelte Strahlung die Oberfläche des Objektes punktweise abtastet und von dieser reflektiert wird und die Remission mittels Strahlungsdetektion erfaßt wird,
die Strahlungsquelle sowie die Strahlungsdetektoren in einem in z-Richtung vertikal linear bewegbaren sowie verschwenkbaren Abtastkopf befindlich sind, mit den Schritten:
Drehung des Objektes um eine Drehtischachse bei gleichem Objektabstand zum umfangsmäßig, ringweise oder spiralförmig erfolgenden Abtasten des Objektes, wobei ein schrittweises oder fortlaufendes Verstellen des Abtastkopfes in z-Richtung und Abtasten des Objektes erfolgt, und die derart gewonnenen Daten abgespeichert und zur dreidimensionalen Rekonstruktion des Objektes mittels einer Datenverarbeitungseinheit verwendet werden,
wobei hierfür der Ort der reflektierten Strahlung auf mindestens einer als Strahlungsdetektor verwendeten CCD-Zeile zur Ermittlung des Maßes der Entfernung zwischen der Drehtischachse und dem abgetasteten Punkt auf der Oberfläche des Objektes bestimmt wird,
gekennzeichnet durch
- Wiederholung des ringweisen Abtastens bei einer gegebenen Position in z-Richtung des Abtastkopfes und unter unterschiedlichen Kipp- und/oder Schwenkwinkelstellungen des Abtastkopfes dann, wenn Auswirkungen von Hinterschneidungen, verdeckten Stellen, Sacklöchern oder ebenen Flächen parallel zum Taststrahl erkannt wurden, und
- Nachregeln der Strahlungsquelle mittels Gesamtlichtstrommessung derart, daß die Lichtsignaldynamik am Strahlungsdetektor nahezu gleichbleibend ist,
- wobei der Abtastkopf in der x-y-Ebene um die z-Achse geschwenkt und/oder in der x-z-Ebene um die y-Achse gekippt wird.

2. Verfahren nach Anspruch 1,
dadurch gekennzeichnet,
daß der Abtastkopf um eine vorgegebene Winkellage um die Achse der Strahlungsquelle gedreht wird.

3. Verfahren nach einem der vorangegangenen Ansprüche,
dadurch gekennzeichnet,
daß die Bewegung des Abtastkopfes in vertikaler, z-Richtung kontinuierlich eingestellt wird.

4. Verfahren nach Anspruch 1,
dadurch gekennzeichnet,
daß die Datenverarbeitungseinheit dreidimensionale Daten des Objektes derart bereitstellt, daß diese Daten über ein Interface von einer Standard-CAD-Workstation weiterverarbeitet werden können.

5. Verfahren nach Anspruch 1 oder 4,
dadurch gekennzeichnet,
daß das Ausgangssignal der mindestens einen CCD-Zeile analog oder digital entfaltet und eine Schwerpunktbestimmung zur Meßsignalbewertung durchgeführt wird.

6. Verfahren nach Anspruch 1,
dadurch gekennzeichnet,
daß mittels einer steuerbaren Fokussiereinrichtung die Strahltaille oder der Fokus der gebündelten Strahlung je nach Meßentfernung unter Nutzung der erhaltenen Meßergebnisse von Umgebungspunkten in Echtzeitbetrieb auf in hinreichender Nähe des jeweiligen, momentanen Meßpunktes gelegt wird.

7. Verfahren nach Anspruch 6,
dadurch gekennzeichnet,
daß die aus einem Kollimator und einem zu diesem koaxial sitzenden Linearantrieb mit geringer Masse, hohem Beschleunigungsvermögen und definiertem Dämpfungsverhalten bestehende Fokussiereinrichtung beim Messen so angesteuert wird, daß die Regelzeiten im ms-Bereich hinreichend gut und achsenparallel versatzfehlerarm fokussiert und justiert werden kann.

8. Verfahren nach einem der vorangegangenen Ansprüche,
gekennzeichnet durch
Verwendung zur Schuhleistenvermessung, im Formenbau sowie für orthopädische, dentaltechnische und archäologische Zwecke.

## Claims

1. Method for the non-contact measurement of three-dimensional objects on the basis of optical triangulation, wherein the bundled radiation emitted by a radiation source in the x direction of a Cartesian x, y, z coordinate system strikes and is reflected by the surface of the object in a punctate manner and this reflection is monitored by radiation detection,
the radiation source and the radiation detectors are mounted in a scanning head that can be moved linearly in the vertical z direction as well as pivoted, with the steps:
rotation of the object about a turntable axis maintaining the same object distance while the object is scanned about its circumference along an annular or spiral path, such that the scanning head is displaced in the z direction in a stepwise or continuous manner during the scanning, and the data so obtained are stored and used for three-dimensional reconstruction of the object by means of a data-processing unit,
wherein for this purpose the site of the reflected radiation on at least one CCD row serving as radiation detector is determined in order to derive the distance between the axis of turntable rotation and the sampled point on the surface of the object,
characterized by
- repetition of the annular scanning at a given position of the scanning head in the z direction and with different settings of the tilt and/or swivel angles of the scanning head whenever effects of undercuts, hidden places, blind holes or flat surfaces parallel to the scanning beam are detected, and
- readjustment of the radiation source by means of total light flux measurement in such a way that the light-signal dynamics at the radiation detector is nearly uniform,
- wherein the scanning head is swivelled about the z axis in the x-y plane and/or tilted about the y axis in the x-z plane.

2. Method according to Claim 1,
characterized in that the scanning head is rotated about the axis of the radiation source through a predetermined angular range.

3. Method according to one of the preceding claims,
characterized in that the movement of the scanning head is continuously adjusted in the vertical, z direction.

4. Method according to Claim 1,
characterized in that the data-processing unit provides three-dimensional data for the object in such a form that these data can be further processed by a standard CAD workstation, by way of an interface.

5. Method according to Claim 1 or 4,
characterized in that the output signal of the at least one CCD row is processed by either analog or digital procedures and a centroidal determination is carried out to evaluate the measurement signal.

6. Method according to Claim 1,
characterized in that by means of a controllable focussing mechanism the narrowest point in the beam, or the focus of the bundled radiation, is adjusted in accordance with the measurement distance, by making use of the measurements obtained for surrounding points in real-time mode, so that its position is sufficiently close to the momentary measurement point.

7. Method according to Claim 6,
characterized in that the focussing mechanism, consisting of a collimator and a linear drive coaxial therewith and having low mass, high acceleration capacity and specified damping behaviour, is so controlled during the measurement process that with response times in the ms range it can be focussed and adjusted adequately well and with little positioning error parallel to the axis.

8. Method according to one of the preceding claims,
characterized by employment for measuring shoe lasts, in mould construction and for orthopedic, dental technological and archaeological purpose

## Revendications

1. Procédé de mesure sans contact d'objets tridimensionnels basé sur la triangulation optique, le rayonnement en faisceau, émis par une source de rayonnement dans un système de coordonnées x, y, z cartésien dans la direction x, balayant point par point la surface de l'objet et étant réfléchi par cette dernière, et la réflexion diffuse étant enregistrée par détection de rayonnement,
la source de rayonnement, ainsi que les détecteurs de rayonnement, étant mobiles linéairement dans le sens vertical dans la direction z et se situant dans une tête de balayage pivotante, avec les étapes de :
- rotation de l'objet autour d'un axe de table tournante pour une même distance de l'objet par rapport au balayage de ce dernier, assuré sur le pourtour, en anneau ou en spirale,
- un réglage progressif ou continu de la tête de balayage dans la direction z et
- le balayage de l'objet étant assurés, mémorisation des données ainsi acquises et utilisation pour la reconstruction tridimensionnelle de l'objet au moyen d'une unité de traitement des données,
l'emplacement du rayonnement réfléchi étant à cet effet déterminé sur au moins une ligne CDD utilisée comme détecteur de rayonnement, en vue de déterminer la mesure de la distance entre l'axe de la table tournante et le point balayé sur la surface de l'objet,
caractérisé par
- une répétition du balayage annulaire pour une position donnée dans la direction z de la tête de balayage et sous différentes positions angulaires de basculement et/ou pivotement de la tête de balayage, lorsque des répercussions de contre-dépouilles, endroits masqués, trous borgnes ou surfaces planes ont été identifiées parallèlement au faisceau de balayage, et
- un rajustement de la source de rayonnement par mesure du flux lumineux total, de sorte que la dynamique du signal lumineux soit à peu près constante sur le détecteur de rayonnement,
- la tête de balayage étant animée d'un mouvement de pivotement autour de l'axe z dans le plan x-y et/ou d'un mouvement de basculement autour de l'axe y dans le plan x-z.

2. Procédé suivant la revendication 1, caractérisé en ce que la tête de balayage est animée d'un mouvement de rotation d'une position angulaire prédéfinie autour de l'axe de la source de rayonnement.

3. Procédé suivant l'une des revendications précédentes, caractérisé en ce que le déplacement de la tête de balayage est réglée en continu dans la direction z, verticale.

4. Procédé suivant la revendication 1, caractérisé en ce que l'unité de traitement des données fournit des données tridimensionnelles de l'objet, de sorte que ces données peuvent être traitées ultérieurement, par l'intermédiaire d'une interface, par une unité centrale CAO standard.

5. Procédé suivant l'une des revendications 1 et 4, caractérisé en ce que le signal de sortie de la ligne CDD, au moins, est soumis à un développement analogique ou numérique, et une détermination du barycentre est réalisée pour apprécier le signal de mesure.

6. Procédé suivant la revendication 1, caractérisé en ce que, au moyen d'un dispositif de focalisation doté d'une possibilité de commande, la taille du faisceau ou le foyer du rayonnement en faisceau, suivant la distance respective de mesure, est ajusté en temps réel, en utilisant les résultats de mesure obtenus de points environnants, à proximité suffisante du point de mesure courant, respectif.

7. Procédé suivant la revendication 6, caractérisé en ce que le dispositif de focalisation, composé d'un collimateur et d'un entraînement linéaire, coaxial à ce dernier, d'une faible masse, d'un pouvoir d'accélération élevé, et d'un comportement en amortissement pré-défini, est commandé lors de la mesure de sorte que les temps de réglage peuvent être focalisés et ajustés correctement dans la plage ms et avec de faibles erreurs de déport parallèlement à l'axe.

8. Procédé suivant l'une des revendications précédentes, caractérisé par l'utilisation pour la mesure d'embauchoirs, dans la construction des moules, ainsi qu'à des fins orthopédiques, dentaires et archéologiques.
